# EUROPEAN PATENT SPECIFICATION

(11) **EP 1 893 509 B1**
(45) Date of publication and mention of the grant of the patent: **08.06.2016**
(21) Application number: 05753921.5
(22) Date of filing: 17.06.2005
(51) Int. Cl.: B65F 5/00, B65G 53/66, E04F 17/12

(54) **A METHOD OF OPERATING A WASTE COLLECTION TANK AND A SYSTEM FOR CONTROLLING THE OPERATION OF THE SAME**
VERFAHREN ZUM BETRIEB EINES ABFALLSAMMELBEHÄLTERS UND SYSTEM ZUR STEUERUNG VON DESSEN BETRIEB
PROCEDE DE FONCTIONNEMENT DE CUVE DE COLLECTE DE DECHETS ET SYSTEME POUR COMMANDER LE FONCTIONNEMENT DE CELLE-CI

(43) Date of publication of application: 05.03.2008
(73) Proprietor: Envac AB, 112 26 Stockholm (SE)
(72) Inventor: HAMMAR, Rune, S-423 55 Torslanda (SE)
(74) Representative: Aros Patent AB
(86) International application number: PCT/SE2005/000971
(87) International publication number: WO 2006/135296

(56) References cited:
- WO-A1-00/46130
- JP-A- 01 197 206
- JP-A- 02 255 401
- JP-A- 06 009 006
- JP-A- 07 309 403
- JP-A- 08 165 004
- JP-A- 10 045 207

## Description

### TECHNICAL FIELD

The present invention generally concerns waste storage tanks of waste collection systems, wherein waste, such as household waste, is temporarily stored and is agitated and conveyed by a conveyor means and from which the waste is subsequently removed by vacuum, and specifically relates to the process of operating such tanks in association with the emptying thereof.

### BACKGROUND

Vacuum operated closed systems for the collection and transport of refuse or waste from a number of collection points are widely used in most parts of the world. They are used as a clean and sanitary solution to the problems concerning smell and dirty containers or bags that accompanied traditional systems. In common applications such systems may be divided into two major groups, namely mobile and stationary collection systems. In the mobile system, waste is inserted into inlets and is collected in storage tanks that are emptied at regular intervals by means of vacuum-equipped vehicles. The vehicles in turn connect to specific docking stations communicating with the storage tanks through pipe systems. In the stationary systems, the inserted waste is stored in storage volumes at separate collection points. The storage volumes may i.e. be an expanded lower portion of a vertical chute, above a discharge valve, or a waste storage tank into which one or several such vertical chutes open. Waste from the different collection points is transported by suction in a pipe system to a central collecting station where the necessary vacuum is created.

In line with a general trend towards increasing amounts of waste being produced at the collection points, partly due to increasingly densely populated residential areas, and partly due to a general desire to reduce installation costs by providing fewer collection points placed in specific areas, it has become increasingly desirable to optimize emptying of the collected volumes of waste. One approach to do this has been to provide sophisticated methods and systems for optimizing the emptying sequences for the collection points of stationary systems, such as disclosed in our international applications Nos. WO 2004/094270 A1; WO 01/05684 A1 and WO 01/05683 A1. Another general approach is to increase the size of the storage volumes and storage tanks. Increasing the temporarily stored waste volume at each collecting point will contribute to a certain degree to solving the problems associated with the emptying of increasing amounts of waste in densely populated areas. However, specific processes and equipment for effective and secure emptying of such increased volumes will be required.

In our international application No. WO 00/46130, which corresponds to the preambles of appended claims 1 and 14, is disclosed an expanded storage volume for use in stationary or mobile systems. This storage volume is extended mainly in a vertical direction and is provided with a downwardly inclined bottom so that waste is conveyed towards an outlet mainly by gravity. An agitator is provided at the inclined bottom of the volume and essentially has a loosening and redistributing effect to avoid blocking of the outlet. This expanded storage volume is mainly beneficial in applications where a moderate expanded volume is required and the necessary vertical space is available. It is disclosed therein that, in view of its main stirring action the agitator is preferably started prior to opening the outlet. Furthermore, the only control of the operation of the agitator that is contemplated in the document is a possible general control of its speed.

EP 0 093 825 A1 discloses a waste storage container for use in a mobile waste collection system. The container has a motor driven transport device of the conveyor screw type installed in a part circular collecting duct at the horizontal bottom of the container. Rotation of the transport.device is started when the container is full, and serves to press out the waste so that it may be sucked out through a discharge by vacuum. To our knowledge, this solution has never been in commercial use and it is very doubtful whether the disclosed design and operation of the container would in effect permit effective emptying of accumulated waste therefrom. The disclosure of the document does not consider the consequences of disturbances in the discharge. The suggested operation of the container would therefore most certainly lead to frequent blocking of the discharge, at least when emptying a container having a fill level well above the transport device.

### SUMMARY

It is a general object of the present invention to provide an efficient and reliable method of operating a waste storage tank of a vacuum waste collection system as well as an improved system for providing such operation of the waste storage tank.

It is another object of the invention to provide an improved control system for controlling the discharge of waste from a waste storage tank of a vacuum waste collection system.

In particular, it is an object of the invention to optimize emptying of waste storage tanks of vacuum operated waste collection systems both with regard to shortening the emptying time and to eliminating or at least minimizing blocking of the waste discharge.

These and other objects are met by the invention as defined by the accompanying patent claims.

The invention generally relates to vacuum operated waste collection systems and to storage tanks used therein for temporarily storing accumulated waste and having an inlet for receiving waste, a powered conveyor means rotatably supported close to a bottom of the tank and an outlet through which the accumulated waste is discharged by vacuum applied to the tank. It has been recognized that essentially improved emptying performance can be obtained by controlling the interaction of the vacuum application to the tank and the operation of the conveyor means. A basic idea is to perform detection of the flow of transport air through the tank as well as the level of the applied vacuum at a predetermined time after opening the discharge valve and applying vacuum, to compare said detected air flow and vacuum level with predetermined threshold values and to control operation of the conveyor means based on the result of the detection.

By determining that said air flow and vacuum level values lie within the desired range and by starting operation of the conveyor means with a time delay and only when the proper air flow and vacuum conditions have been established, it is possible not only to secure that waste being close to the discharge opening has been discharged before positively conveying further waste towards the discharge opening by means of the conveyor, but also generally to avoid blockage.

In one embodiment it is suggested to detect a differential pressure between atmospheric air and air in the tank air intake to determine air flow through the tank.

Preferably, the air flow and the vacuum level are continuously monitored during operation of the conveyor means, so that any tendency to blockage caused by too rapid advancement of waste towards the discharge may be eliminated by temporarily stopping rotation of the conveyor means. In addition to monitoring the air flow and vacuum level it may also be preferable to monitor the drive torque of the conveyor motor during operation thereof. Monitoring the drive torque will provide further information regarding the waste accumulation conditions in general and regarding the work load of the conveyor in particular, and may be used to provide further security against disturbances in the discharge.

A waste collection system and its operation according to the present invention offers a number of advantages, including:
- Promotes faster and more reliable emptying of storage tanks;
- The system becomes less sensitive to disturbances in or blockage of the discharge of waste from storage tanks;
- Permits the effective use of large sized tanks having several inserts, thereby;
- Allowing for a general reduction of installation costs of the waste collection system:
- Permits monitoring and control of the discharge of waste from the tank.

Advantages offered by the present invention, in addition to those described above, will be readily appreciated upon reading the below detailed description of embodiments of the invention.

### BRIEF DESCRIPTION OF THE DRAWINGS

The invention, together with further objects and advantages thereof, will be best understood by reference to the following description taken together with the accompanying drawings, in which:
- Fig. 1: is a partly schematical illustration of an embodiment of a conventional mobile waste collection system;
- Fig. 2: is a partly schematical side view of a waste collection tank and a waste collection system according to the invention;
- Fig. 3: is an end view of the waste collection tank of Fig. 2;
- Fig. 4: is a schematic diagram of a tank operation control system according to a preferred embodiment of the invention;
- Figs. 5A-B: are schematic flow diagrams of a method of operating a waste collection tank according to a preferred embodiment of the invention; and
- Fig. 6: is a partly schematical illustration of an alternative embodiment of a waste collection system according to the invention.

### DETAILED DESCRIPTION

The invention will now be explained with reference to exemplifying embodiments of the inventive system and method, respectively, which are illustrated in the drawing figures. The main illustrated and described, exemplifying embodiment relates to an application of the inventive solution to a waste collection system of the mobile type wherein waste collection tanks are emptied by means of a collection truck. However, it shall be emphasized, and will be clarified further below, that the invention is in no way restricted to such an application.

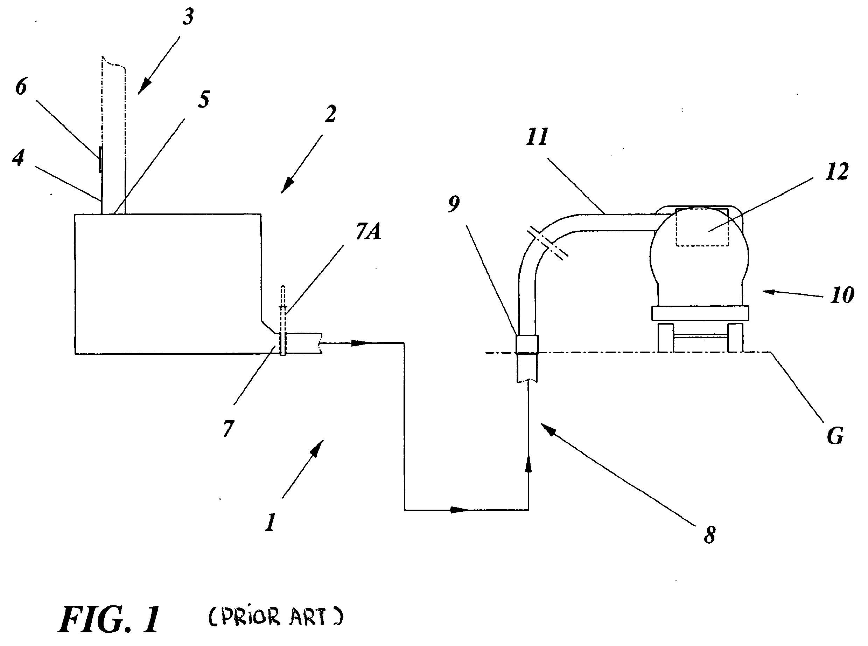

Fig. 1 schematically illustrates a conventional vacuum operated waste collection system 1 of the mobile type, wherein waste is inserted into a closed tank or container 2 at a waste collection point 3. The collection point may be of any conventional type, comprising an insertion chute 4 that is connected to an opening 5 in the upper region of the tank 2 and of which only the lower part is illustrated. In the given example the system is illustrated with an insertion chute 4 of the type extending vertically through multistory buildings (not illustrated), such as residential buildings, hospitals or office buildings. Such a multistory insertion chute 4 has closable insertion openings or inlets 6 on each floor, through which refuse or waste may be inserted. However, to the tank 2 may instead or also be connected chutes referred to as "separate" insertion chutes (not illustrated) normally positioned outdoors and being provided with at least one insertion opening positioned at a convenient height for inserting waste therein standing on the ground. The tanks 2 may be accommodated i.e. in a designated space in the basement of a building, underground or standing on the ground G or in a designated smaller building.

An outlet 7 from the tank is connected to a pipe system 8 leading to a docking point 9 at a location that may be remote from the tank. In most systems a discharge valve 7A is provided, controlling the opening and closing of the outlet 7. Such a discharge valve 7A is required in each situation where more than one tank is emptied from one and the same docking point 9. The tanks 2 are emptied by a mobile vacuum truck 10 that drives up to the docking point 9. The vacuum truck 10 has an extendable tube or pipe 11 that may be docked to the docking point 9 to connect it to the pipe system 8. The vacuum truck is equipped with a vacuum source 12 that applies vacuum to the tank 2 through the truck pipe 11 and the pipe system 8. By this application of vacuum, the accumulated waste in the tank 2 is sucked to the truck 10 that also contains equipment for compacting and storing the collected waste.

Although it presents an odor-free, clean and worker-friendly solution, the described general system still suffers from a number of shortcomings, as was indicated in the introduction. Specifically, the present day demand for increased tank and container volumes, in order to handle larger amounts of waste and to lower the installations costs etc., cannot be met by the existing tanks and systems.

The present invention now provides a waste collection system of the same general nature that permits an essential increase of the tank volumes while maintaining secure emptying without risking blockage of the system. Allowing for an increased tank volume makes it possible to design systems having more centralized collection points, i.e. with multiple chutes connected to one and the same tank. Such an approach also takes account of the desire to optimize the emptying procedure, by having the vacuum trucks collecting the waste from fewer collecting points that are easily accessible by the vacuum trucks. The invention is based on the insight that fast and secure emptying of large sized waste tanks and containers requires monitoring of vital parameters of the waste discharge therefrom and controlling the action of a conveyor means positioned in the tank or container based on the result of said monitoring.

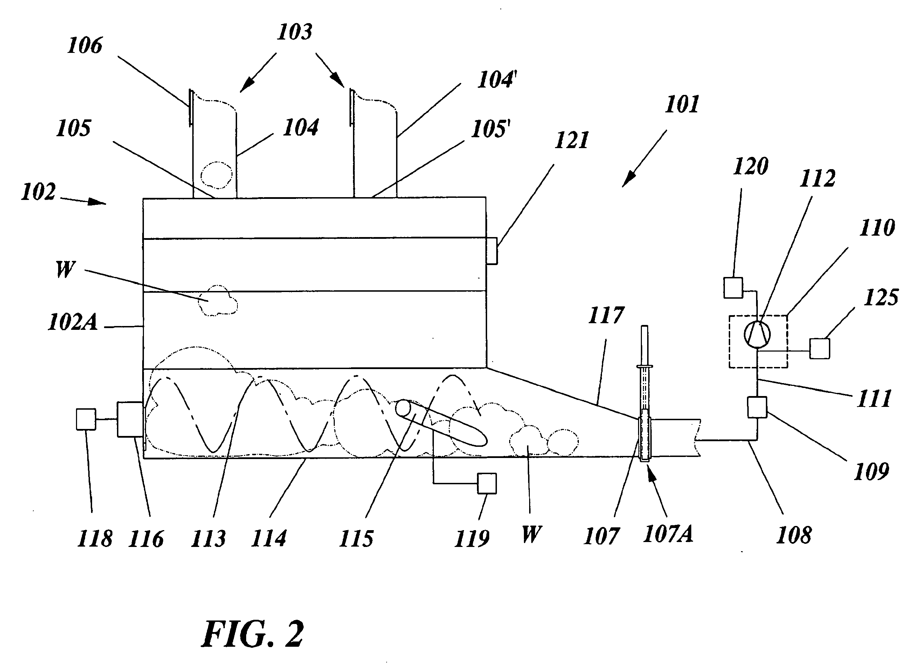

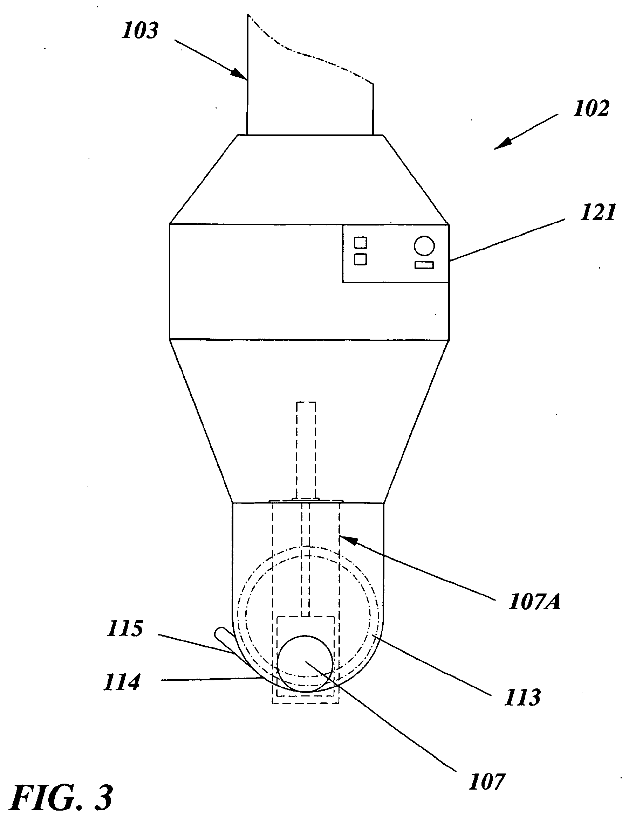

Fig. 2 is a schematic illustration of an exemplary embodiment of a mobile waste collection system 101 of the present invention. In the exemplary embodiment only one tank 102 (see also Fig. 3) is connected to the docking point 109 of the system 101. It should be understood though, that in the normal mobile waste collection system it is common that several tanks or containers are connected to and emptied from each docking point 9. In such situations the selection of the tank to be emptied is done by opening the corresponding discharge valve 107A and by maintaining the discharge valves of other tanks closed.

The upper part of the tank 102 is provided with two supply openings 105, 105' that are connected to a respective insertion chute 104, 104' at the waste collection point 103. The two supply openings are illustrated here to emphasize that with the system of the invention much larger tanks than heretofore may be emptied in an effective and secure way, as will be clear from the following description. It shall be mentioned in this context that the invention is not limited to operating tanks having two supply openings or any other specific number of such openings.

As is clear from Fig. 3, the lower portion of the tank 102 generally tapers downwardly towards a bottom section 114 thereof. The bottom section 114 accommodates a conveyor means 113 that is supported in a rear end wall 102A of the tank 102 to be rotatable in the bottom section 114. The conveyor means 113 extends from said rear end wall 102A and to a position approximately at, and preferably just before, the entrance to a discharge section 117 that tapers in a direction away from the tank 102 and that forms a forward continuation of the bottom section 114. For the purpose of the invention, it is presently preferred to employ a shaftless screw conveyor as the very schematically illustrated conveyor means 113. The screw conveyor 113 is cantilevered from the rear tank wall 102A and is driven by an electric motor 116, as is schematically illustrated in Fig. 2. The shaftless type of screw conveyor has an open centre and is unsupported along its full length, and will therefore provide the desired positive distributing and conveying action but does not cause any substantial compression of the waste W. In practice, the conveyor 113 is rotated at a moderate speed of between approximately 5-20 rpm, depending upon the specific application. It will be seen in Fig. 3 that in the embodiment using the screw conveyor 113, the wall of the bottom section 114 has a rounded shape and closely follows the circumference of the screw 113. In this way, the screw 113 will be indirectly supported by the bottom section wall and waste W will furthermore not tend to become clinched between the screw 113 and the bottom section 114.

At its outer narrow end, the discharge section 117 communicates with a standardized pipe system 108 through a discharge opening 107 that is controlled by a standard type discharge valve 107A, that, depending upon the application, may be operated by a pressurized fluid actuator or by an electric motor. The pipe system 108 connects to a docking point 109 to which the schematically indicated vacuum truck 110 with its onboard vacuum source 112 will be docked to create the required vacuum level in the discharge section 117. An atmospheric air intake 115 is provided that opens into the tank 102 close to the free end of the screw conveyor 113, where the discharge section 117 begins. The application of the vacuum through the opened discharge valve 107A does, in combination with the air intake 115, create an air flow through said section 117. This created air flow will in the known manner discharge waste W from the discharge section 117 of the tank 102. With reference to Fig. 2 sensor means 118, 119, 120 and 125 are also schematically illustrated. Said sensors are provided for detecting operational parameters of the system 101, which are used to control the discharge or emptying operation of the collection tank 102, as will be described further below. Specifically, means 118 are provided in association with the conveyor drive motor 116 for detecting a value representative of the motor load put on the motor during operation and consequently of the instant work load on the conveyor screw 113. In practice, and by the presently preferred use of an electric drive motor 116 that has a stationary power supply, the detection is made through the power supply. A current relay in an electric box 121 attached directly to the tank 102 may serve as said sensor means 118 detecting the power consumption and thus the drive or load torque of the motor 116. In a further developed embodiment where it is desired to control the speed of the drive motor 116, the motor load may be detected through a frequency inverter that is used for speed control and that is a more expensive solution.

A further sensor means 119 is provided for detecting a value representative of the air flow or air velocity through the tank 102 discharge section 117. In a practical application this sensor means 119 is a pressure sensor for detecting a differential pressure between an atmospheric pressure and an air pressure in the air intake 115 and likewise positioned in the electric box 121. A third sensor means 120 is provided for detecting a value representative of the level of the vacuum applied to the tank 102 discharge section 117, or actually to the pipe system 108. In a practical application said third sensor means 120 is namely provided on board the vacuum truck 110, directly sensing the vacuum level created by the vacuum source 112. A forth sensor means 125 is provided for detecting the passage of waste objects W discharged from the tank 102. In practice, the forth sensor 125 is preferably an IR sensor that is likewise provided on board the truck 110 and that detects waste objects blocking the IR beam on their way passing the truck pipe 111. The purpose of said sensor means 118, 119, 120, 125 will be clarified below.

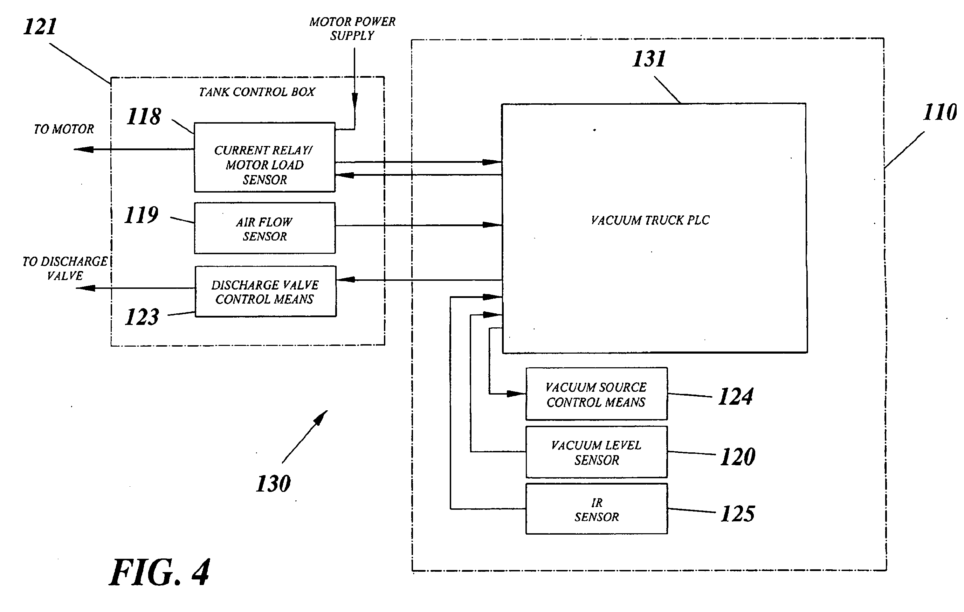

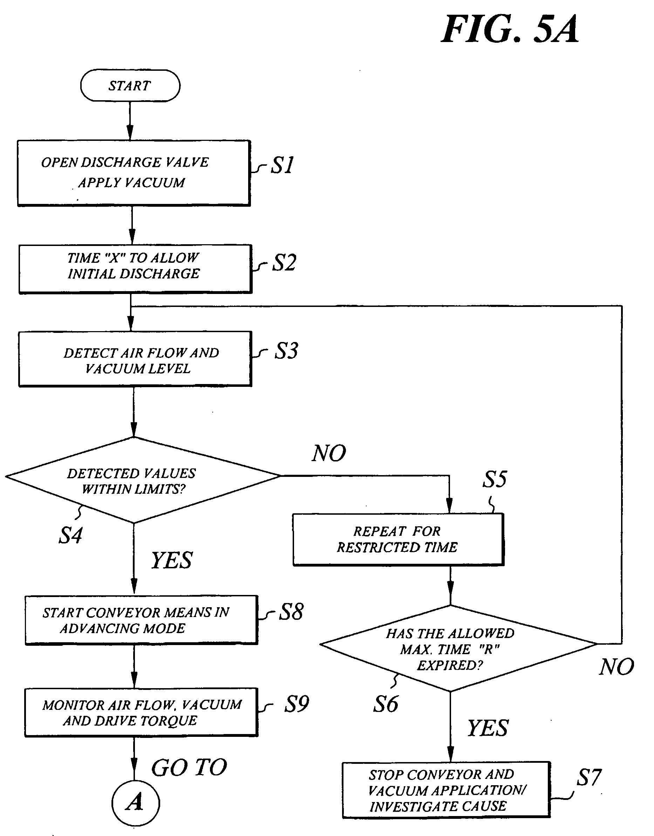

A control system 130 according to a preferred embodiment of the invention, for operating the waste collection tank 102 of the waste collection system 101 will now be described with specific reference to the schematic drawing figure 4. The method proposed by the invention can be implemented as software, hardware or a combination thereof Preferably, however, the method is implemented as a program, which when running on a PLC (Programmable Logic Controller) 131 or equivalent processor or computer, makes the PLC perform the steps, functions and actions defined in the flow diagram of Figs. 5A-B. In practice, the relevant steps, functions and actions of the invention are mapped into a program, which is downloaded into the target control system such as a PLC.

A PLC is a control hub that can be used for a variety of automated applications. They normally contain multiple inputs and outputs that use programmable logic to simulate switches and relays to control equipment. The PLC is typically programmable via standard computer interfaces and programming languages.

The control system 130 is connected to the other components of the waste collection system 101 through conventional communication links that are utilized for receiving signal information from the waste collection system and for sending control signals to the discharge valve 107A, the drive motor 116 and the vacuum source 112. In particular, the PLC 131 receives information from the described motor load 118, air flow 119, vacuum level 120 and IR 125 sensors of the system 101, and based on this information the program running on the PLC 131 makes the PLC perform a tank operation procedure, for example as described below. The result is that appropriate control signals are sent to a discharge valve control means 123, a conveyor drive motor control means 118 and vacuum source control means 124 for effectuating controlled emptying of the tank 102.

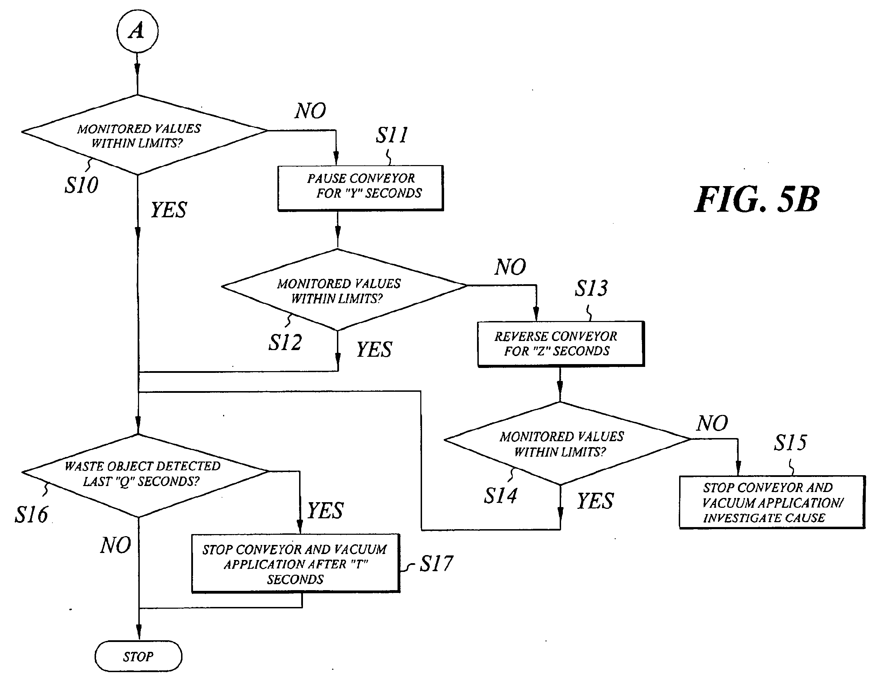

Fig. 5 is a flow chart summarizing a method for tank operation according to an exemplary embodiment of the present invention. In a first step S1, after docking the vacuum truck 110 to the docking point 109, the proper tank 102 is chosen by opening the corresponding discharge valve 107A, and the vacuum source 112 is activated to apply full vacuum to the pipe system 108 and the tank discharge section 117. The application of vacuum to the tank, through the open discharge valve 107A, is continued for a preset time interval X in step S2. This time interval is chosen to secure that the tapered discharge section 117 is emptied of accumulated waste W at the start of the emptying procedure. In step 3, after said time interval X, values representative of the air flow through the tank discharge section 117 as well as of the level of vacuum applied to said tank section 117 are then detected by means of the differential pressure sensor 119 and the vacuum level sensor 120, respectively. The detected air flow and vacuum level values are compared with selected minimum and maximum threshold values, respectively, in step 4. In the event that any of the detected values lie outside their preset limits, this is an indication that waste W remains in the discharge section 117 and blocks proper air flow there through. If this situation occurs the vacuum application continues for a selected maximum time R in step 5, with repeated detection and comparing of the values. The maximum time R is monitored in step 6, and when said time R has expired the procedure is stopped in step 7 by stopping the conveyor and the vacuum application, and the cause of the blocking is investigated. An alarm may be triggered by the expiration of the maximum time R, to make an operator aware of the situation.

If, on the other hand, the detected values lie within the preset limits, activation of the agitating and conveying means 113 is allowed in step 8, to cause accumulated waste W from the main section of the tank 102 to be conveyed towards and into the air flow in the discharge section 117. In other words, waste W is thereby discharged from the tank 102 and into the pipe system 108 by means of the applied vacuum, assisted by the agitating and conveying means 113. In steps 9 and 10 the air flow and vacuum level values are continuously monitored and compared with the respective selected minimum and maximum threshold values. In addition thereto, a value representative of the drive torque applied to the agitating and conveying means 113 by the drive motor 116, in other words the motor load put on the motor 116, is also continuously detected and monitored and compared with a selected maximum threshold value during operation of the agitating and conveying means 113. In the event that any of said values representative of the air flow, vacuum level or motor load falls outside its preset limit value, the agitating and conveying means 113 is paused by at least temporarily stopping the drive motor 116 for a selected time Y in step 11.

Monitoring of the three values and comparing them with the selected threshold values continues in step 12 during pausing of the conveyor means. In case all monitored values return to the correct level, the process reenters the discharge phase with activated conveyor means 113. Otherwise, with any of the values remaining outside the limits after deactivation of the conveying means for a time exceeding the preset time Y, the conveyor means 113 and thus the operation of the agitating and conveying means 113 is reversed in step 13 to attempt to clear any disturbance to the discharge. The drive motor 116 and thus the operation of the conveyor means 113 is reversed for a selected and preset time Z and in the situation where any of the monitored values are then still found to be outside the preset limits in step 14, the procedure is stopped in step 15 by stopping the conveyor and the vacuum application, and the cause of the blocking is investigated. In this situation an alarm may likewise be triggered.

If, after performing steps 10, 12 or 14, the monitored values are found to be within their limits, the process proceeds in the discharge phase with activated conveyor means 113. The IR-sensor 125 continuously detects waste objects that are being discharged and that block the beam of the sensor. Specifically the sensitivity of the IR sensor 125 is adjusted so that a preset size of the waste object is required in order for the sensor to react upon the blocking of its beam. In other words the passing of minor waste objects will not activate the sensor. If the air flow, vacuum level and motor load values are all within their preset limits and no waste object has passed the sensor 125 for Q seconds the discharge procedure is stopped in step 16. Irrespective of the progress of said discharge phase, the conveyor means 113 and the vacuum application are automatically timed out in step 17 at a maximum discharge phase time T, which completes the discharge procedure. Therefore, this time T is the maximum time period for continuous activation of the agitating and conveying means.

In a practical application of the invention the following times have proven to produce favorable results in a waste discharge phase: time X= between 10 and 15 seconds, preferably approximately 15 seconds; time Y= approximately 4-5 seconds; time Z= approximately 2-5 seconds, preferably approximately 3 seconds; maximum repeat time R= approximately 30 seconds; time T=180 seconds and time Q=15 seconds. However, these times are only used to exemplify the length of these times and quite different periods may be appropriate for other applications.

In accordance with the invention as described, parameters that are indicative of the waste discharge situation in the tank are detected and used to control the discharge process so that blockage or other disturbance of the discharge process may be prevented by taking appropriate control measures to prevent actual blockage or disturbance from occurring. This will provide excellent conditions for performing a rapid and efficient emptying of the waste collection tank, irrespective of its size (within reasonable limits) and will therefore well satisfy the objects of the invention.

In an alternative, but not specifically illustrated embodiment of the system and method of the invention, a frequency inverter may be used instead of the described current relay, for controlling the conveyor drive motor 116 and for detecting the motor load. In such an embodiment the speed of the conveyor means 113 may also be used as a further means for optimizing the waste conveying phase of the discharge. Specifically, the invention also covers the possibility of comparing the detected air flow, vacuum level and motor load values with multiple limits or threshold values and of using the possibility to first change the speed of the conveyor means when a first limit is exceeded and to pause and/or reverse the conveyor only when further limits are exceeded. With such a configuration different basic conveyor speeds may also be chosen for different situations and/or applications.

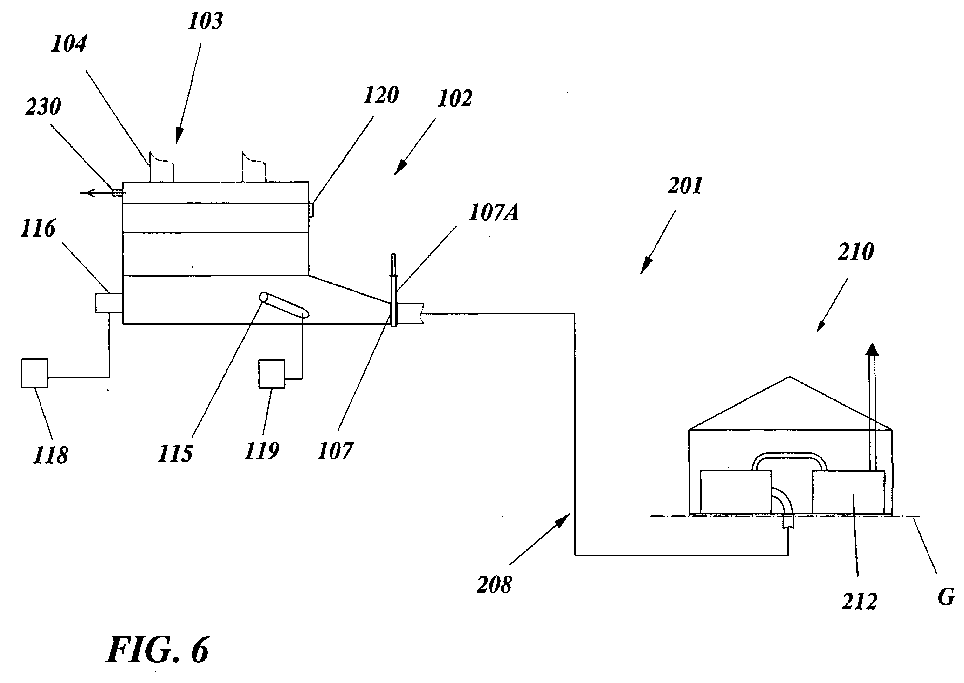

Although the invention has been described and illustrated with specific reference to an application for a mobile type waste collection system, the invention is in no way restricted to such applications. The basic principles of the invention may be applied to most of the presently known waste collection systems. In an alternative embodiment the invention may therefore be applied to a waste collection system 201 of the stationary type, as is illustrated very schematically in Fig 6. In Fig. 6 is illustrated a tank 102 that is identical to the one used in the system of Fig. 2, with the exception that a level sensor 230 is illustrated for detecting the fill level of the tank 102. Presently, such level sensors 230 are mainly contemplated for stationary systems, but their use is not excluded from future mobile systems. With such a level sensor present, the value of the detected fill level may be employed to set parameters, such as vacuum level, duration of the different described times and, in the applicable case, the speed of the conveyor means. Depending upon the actual application, one or more such level sensors may be used to detect one or several different fill levels of the tank and the sensors may either be analogous fill level sensors or digital fill level sensors. Naturally, the invention also covers the possibility of using at least one analogous sensor, the output of which is digitalized for control purposes. Furthermore, the pipe system 208 connected to the discharge opening 107 of the tank 102 does here lead to a collection station 210 of the general type that is employed for stationary systems, containing a vacuum source 212 and other standard equipment such as a separator, a compactor and filters.

Likewise, the invention is not restricted to the use of the presently preferred shaftless type of screw conveyor, but may also employ other available types of conveyors, especially in situations where it is not critical to avoid compression of the waste in the tank.

The invention has been described in connection with what is presently considered to be the most practical and preferred embodiments, but it is to be understood that the invention is not limited to the disclosed embodiments. The invention is therefore intended to cover various modifications and equivalent arrangements included within the scope of the appended claims.

## Claims

1. A method of operating a waste collection tank (102) that intermittently receives waste (W) through at least one waste supply opening (105, 105'), and from which accumulated waste is discharged at intervals, whereby the discharge process is started by applying a vacuum to the tank, through a tank discharge opening (107), and the waste discharge is performed by creating, by means of the applied vacuum, a flow of air from an atmospheric air intake (115) in the tank and through the discharge opening and with the assistance of an agitating and conveying means (113) of screw conveyor type that is supported in the vicinity of a bottom section (114) of the tank and that is rotated by a drive motor (116), **characterized by** performing the following steps:
- detecting, at a predetermined time (X) after opening a discharge valve (107A) controlling the tank discharge opening (107) and after applying the vacuum, a value representative of the air flow through the tank (102) as well as a value representative of the level of the vacuum applied to the tank (102);
- comparing the detected values representative of the air flow and the vacuum level with selected minimum and maximum threshold values, respectively; and
- activating the agitating and conveying means (113) when the detected air flow and vacuum level values lie above and below the respective threshold values;
- to thereby discharge waste from the tank (102) by means of the applied vacuum assisted by the agitating and conveying means (113).

2. A method according to claim 1, **characterized by** detecting a differential pressure between an atmospheric air pressure and a pressure in the air intake as a value representative of the air flow through the tank (102).

3. A method according to claim 1 or 2, **characterized by** continuously, during operation of the agitating and conveying means (113), monitoring the detected value representative of the air flow in the air intake (115) as well as the value representative of the vacuum level in the tank (102) and comparing them with said respective threshold values and by at least temporarily deactivating the agitating and conveying means (113) in the event that any of said values fall below and above, respectively their minimum and maximum threshold values, respectively.

4. A method according to claim 3, **characterized by** continuously, during operation of the agitating and conveying means (113), detecting also a value representative of the actual motor load put on the drive motor (116) of the agitating and conveying means and comparing it with a selected maximum threshold value and by deactivating the agitating and conveying means (113) also in the event that said value representative of the motor load falls above its maximum threshold value.

5. A method according to any of claims 3 or 4, **characterized by** detecting the duration of deactivation of the agitating and conveying means (113) due to such a detected value falling above or below its respective threshold value and by reversing the drive motor (116) and thus the operation of the agitating and conveying means for a selected time (Z) in the event that the duration of such a deactivation of the agitating and conveying means exceeds a selected time (Y).

6. A method according to claim 5, **characterized by** performing the reversion of the drive motor (116) and thus of the operation of the agitating and conveying means (113) for a selected time (Z) of approximately 2-5 seconds.

7. A method according to claim 5 or 6, **characterized by** reversing the drive motor (116) and thus the operation of the agitating and conveying means (113) after a deactivation of the agitating and conveying means exceeding a selected time (Y) of approximately 4-5 seconds.

8. A method according to any of claims 1-7, **characterized by** activating the agitating and conveying means (113) for a maximum continuous time period (T) of approximately 3 minutes.

9. A method according to any of claims 1-8, **characterized by** continuously detecting the flow of waste material (W) from the tank (102) and by deactivating the agitating and conveying means (113), interrupting the application of vacuum to the tank and, in the applicable case, closing the tank discharge opening (107), when a flow of waste material has not been detected for a preset time period (R).

10. A method according to any of claims 1-9, **characterized by** controlling the speed of rotation of the agitating and conveying means (113) in dependence upon the detected air flow, vacuum level and/or drive torque values.

11. A method according to any of claims 1-10, **characterized by** applying the vacuum from a vacuum source (112) located in a mobile collection truck (110).

12. A method according to any of claims 1-10, **characterized by** applying the vacuum from a vacuum source (212) of a stationary waste collection system (201).

13. A method according to any of claims 1-12, **characterized by** detecting the air flow value as well as the vacuum level value approximately 15 seconds after the start of the discharge process.

14. A system for controlling the operation of a waste collection tank (102) having at least one waste supply opening (105) through which waste (W) is received, a tank discharge opening (107) through which accumulated waste is discharged into a discharge pipe system (108; 208), an atmospheric air intake (115) in the tank, an agitating and conveying means (113) that is rotated by a drive motor (116) and that is supported in the vicinity of a bottom section (114) of the tank and a vacuum source (112; 212) communicating with the pipe system (108; 208) for applying vacuum to the tank (102); through said discharge opening (107), **characterized by**:
- means (119) for detecting a value representative of the air flow through the tank (102);
- means (120) for detecting a value representative of the vacuum level in the pipe system (108; 208); and
- means (130) for receiving information from said detecting means (119, 120), for comparing said received information with preset threshold values and for controlling operation of the agitating and conveying means (113) and application of the vacuum based on said comparison.

15. A system according to claim 14, **characterized by** means (118) for detecting a value representative of the motor load put on the drive motor (116) during operation of the agitating and conveying means (113).

16. A system according to claim 15, **characterized in that** said means (118) for detecting a value representative of the motor load put on the drive motor (116) is a current relay controlling the motor.

17. A system according to claim 15, **characterized in that** said means (118) for detecting a value representative of the motor load put on the drive motor (116) is a frequency inverter for controlling the drive motor (116).

18. A system according to any of claims 14-17, **characterized in that** the means (119) for detecting a value representative of the air flow through the tank (102) is a pressure sensor detecting a differential pressure between an atmospheric pressure and an air pressure in the air intake (115).

19. A system according to any of claims 14-18, **characterized by** means (125) for detecting the passage of waste material (W) through the pipe system (108, 111).

20. A system according to any of claims 14-19, **characterized in that** said means (130) for receiving information from said detecting means, and for controlling operation of the agitating and conveying means (113) and the application of vacuum comprises a Programmable Logic Controller (131).

21. A system according to any of claims 14-20, **characterized in that** the vacuum source (112) is integrated in a mobile collection vehicle (110).

22. A system according to any of claims 14-20, **characterized in that** the vacuum source (212) is part of a stationary waste collection system (201).

23. A system according to any of any of claims 14-22, **characterized by** one or several analogous or digital fill level sensors (230) in the tank (102), for detecting waste fill levels therein.

24. A system according to any of claims 14-23, **characterized in that** the agitating and conveying means (113) is a shaftless screw conveyor that is cantilevered from a tank wall (102A).

## Patentansprüche

1. Verfahren zum Betrieb eines Abfallsammelbehälters (102), der durch mindestens eine Abfallzufuhröffnung (105, 105') periodisch Abfall (W) empfängt und aus dem angesammelter Abfall in Intervallen durch eine Behälterentladungsöffnung (107) entladen wird, wobei der Entladungsprozess durch Anlegen eines Vakuums an den Behälter gestartet wird, und die Abfallentladung durch Erzeugen eines Luftstroms mittels des angelegten Vakuums von einem Einlass für atmosphärische Luft (115) im Behälter und durch die Entladungsöffnung und mit der Unterstützung eines Rühr- und Fördermittels (113) vom Typ eines Schneckenförderers durchgeführt wird, das in der Nähe eines Bodenabschnitts (114) des Behälters getragen wird und das durch einen Antriebsmotor (116) gedreht wird, **gekennzeichnet durch** Ausführen der folgenden Schritte:
- Erfassen zu einer vorbestimmten Zeit (X) nach dem Öffnen eines Entladungsventils (107A), das die Behälterentladungsöffnung (107) steuert, und nach dem Anlegen des Vakuums eines Wertes, der für den Luftstrom **durch** den Behälter (102) repräsentativ ist, sowie eines Wertes, der für den Pegel des Vakuums repräsentativ ist, das an den Behälter (102) angelegt wird;
- Vergleichen der erfassten Werte, die für den Luftstrom und den Vakuumpegel repräsentativ sind, mit ausgewählten Minimal- bzw. Maximalschwellenwerten; und
- Aktivieren des Rühr- und Fördermittels (113), wenn die erfassten Luftstrom- und Vakuumpegelwerte über und unter den jeweiligen Schwellenwerten liegen;
- um **dadurch** Abfall mittels des angelegten Vakuums unterstützt vom Rühr- und Fördermittel (113) aus dem Behälter (102) zu entladen.

2. Verfahren nach Anspruch 1, **gekennzeichnet durch** Erfassen eines Differenzdrucks zwischen einem atmosphärischen Luftdruck und einem Druck im Lufteinlass als einen Wert, der für den Luftstrom durch den Behälter (102) repräsentativ ist.

3. Verfahren nach Anspruch 1 oder 2, **gekennzeichnet durch** kontinuierliches Überwachen des erfassten Wertes, der für den Luftstrom im Lufteinlass (115) repräsentativ ist, sowie des Wertes, der für den Vakuumpegel im Behälter (102) repräsentativ ist, während des Betriebs des Rühr- und Fördermittels (113) und Vergleichen derselben mit den jeweiligen Schwellenwerten und **durch** wenigstens vorübergehendes Deaktivieren des Rühr- und Fördermittels (113), falls einer der Werte unter bzw. über seine Minimal- bzw. Maximalschwellenwerte fällt.

4. Verfahren nach Anspruch 3, **gekennzeichnet durch** kontinuierliches Erfassen eines Wertes, der für die tatsächliche Motorlast repräsentativ ist, die dem Antriebsmotor (116) des Rühr- und Fördermittels auferlegt wird, während des Betriebs des Rühr- und Fördermittels (113) und Vergleichen desselben mit einem ausgewählten Maximalschwellenwert und außerdem **durch** Deaktivieren des Rühr- und Fördermittels (113), falls der Wert, der für die Motorlast repräsentativ ist, über seinen Maximalschwellenwert fällt.

5. Verfahren nach Anspruch 3 oder 4, **gekennzeichnet durch** Erfassen der Dauer der Deaktivierung des Rühr- und Fördermittels (113) infolgedessen, dass solch ein erfasster Wert über oder unter seinen jeweiligen Schwellenwert fällt, und **durch** Umkehren des Antriebsmotors (116) und infolgedessen des Betriebs des Rühr- und Fördermittels für eine ausgewählte Zeit (Z), falls die Dauer solch einer Deaktivierung des Rühr- und Fördermittels eine ausgewählte Zeit (Y) überschreitet.

6. Verfahren nach Anspruch 5, **gekennzeichnet durch** Durchführen der Umkehrung des Antriebsmotors (116) und infolgedessen des Betriebs des Rühr- und Fördermittels (113) für eine ausgewählte Zeit (Z) von ungefähr 2 bis 5 Sekunden.

7. Verfahren nach Anspruch 5 oder 6, **gekennzeichnet durch** Umkehren des Antriebsmotors (116) und infolgedessen des Betriebs des Rühr- und Fördermittels (113) nach einer Deaktivierung des Rühr- und Fördermittels, die eine ausgewählte Zeit (Y) von ungefähr 4 bis 5 Sekunden überschreitet.

8. Verfahren nach einem der Ansprüche 1 bis 7, **gekennzeichnet durch** Aktivieren des Rühr- und Fördermittels (113) für eine maximale kontinuierliche Zeitspanne (T) von ungefähr 3 Minuten.

9. Verfahren nach einem der Ansprüche 1 bis 8, **gekennzeichnet durch** kontinuierliches Erfassen des Stroms von Abfallmaterial (W) aus dem Behälter (102) und **durch** Deaktivieren des Rühr- und Fördermittels (113), Unterbrechen des Anlegens von Vakuum an den Behälter und gegebenenfalls Schließen der Behälterentladungsöffnung (107), wenn für eine voreingestellte Zeitspanne (R) kein Strom von Abfallmaterial erfasst wurde.

10. Verfahren nach einem der Ansprüche 1 bis 9, **gekennzeichnet durch** Regeln der Drehgeschwindigkeit des Rühr- und Fördermittels (113) in Abhängigkeit von den erfassten Luftstrom-, Vakuumpegel- und/oder Antriebsmomentwerten.

11. Verfahren nach einem der Ansprüche 1 bis 10, **gekennzeichnet durch** Anlegen des Vakuums von einer Vakuumquelle (112), die sich in einem mobilen Sammelfahrzeug (110) befindet.

12. Verfahren nach einem der Ansprüche 1 bis 10, **gekennzeichnet durch** Anlegen des Vakuums von einer Vakuumquelle (212) eines stationären Abfallsammelsystems (201).

13. Verfahren nach einem der Ansprüche 1 bis 12, **gekennzeichnet durch** Erfassen des Luftstromwerts sowie des Vakuumpegelwerts ungefähr 15 Sekunden nach Beginn des Entladungsprozesses.

14. System zum Steuern des Betriebs eines Abfallsammelbehälters (102) mit mindestens einer Abfallzufuhröffnung (105), durch welche Abfall (W) empfangen wird, einer Behälterentladungsöffnung (107), durch welche angesammelter Abfall in ein Entladungsrohrsystem (108; 208) entladen wird, einem Einlass für atmosphärische Luft (115) im Behälter, einem Rühr- und Fördermittel (113), das durch einen Antriebsmotor (116) gedreht und in der Nähe eines Bodenabschnitts (114) des Behälters getragen wird, und einer Vakuumquelle (112, 212), die mit dem Rohrsystem (108; 208) zum Anlegen eines Vakuums an den Behälter (102) durch die Entladungsöffnung (107) in Verbindung steht, **gekennzeichnet durch**:
- Mittel (119) zum Erfassen eines Wertes, der für den Luftstrom **durch** den Behälter (102) repräsentativ ist;
- Mittel (120) zum Erfassen eines Wertes, der für den Vakuumpegel im Rohrsystem (108; 208) repräsentativ ist; und
- Mittel (130) zum Empfangen von Informationen von den Erfassungsmitteln (119, 120) zum Vergleichen der empfangenen Informationen mit voreingestellten Schwellenwerten und zum Steuern des Betriebs des Rühr- und Fördermittels (113) und Anlegen des Vakuums basierend auf dem Vergleich.

15. System nach Anspruch 14, **gekennzeichnet durch** Mittel (118) zum Erfassen eines Wertes, der für die Motorlast repräsentativ ist, die dem Antriebsmotor (116) während des Betriebs des Rühr- und Fördermittels (113) auferlegt wird.

16. System nach Anspruch 15, **dadurch gekennzeichnet, dass** das Mittel (118) zum Erfassen eines Wertes, der für die Motorlast repräsentativ ist, die dem Antriebsmotor (116) auferlegt wird, ein Stromrelais ist, das den Motor steuert.

17. System nach Anspruch 15, **dadurch gekennzeichnet, dass** das Mittel (118) zum Erfassen eines Wertes, der für die Motorlast repräsentativ ist, die dem Antriebsmotor (116) auferlegt wird, ein Frequenzumrichter zum Steuern des Antriebsmotors (116) ist.

18. System nach einem der Ansprüche 14 bis 17, **dadurch gekennzeichnet, dass** das Mittel (119) zum Erfassen eines Wertes, der für den Luftstrom durch den Behälter (102) repräsentativ ist, ein Drucksensor ist, der einen Differenzdruck zwischen einem atmosphärischen Druck und einem Luftdruck im Lufteinlass (115) erfasst.

19. System nach einem der Ansprüche 14 bis 18, **gekennzeichnet durch** Mittel (125) zum Erfassen des Durchtritts von Abfallmaterial (W) **durch** das Rohrsystem (108, 111).

20. System nach einem der Ansprüche 14 bis 19, **dadurch gekennzeichnet, dass** das Mittel (130) zum Empfangen von Informationen von den Erfassungsmitteln und zum Steuern des Betriebs des Rühr- und Fördermittels (113) und zum Anlegen des Vakuums eine programmierbare logische Steuerung (131) umfasst.

21. System nach einem der Ansprüche 14 bis 20, **dadurch gekennzeichnet, dass** die Vakuumquelle (112) in ein mobiles Sammelfahrzeug (110) integriert ist.

22. System nach einem der Ansprüche 14 bis 20, **dadurch gekennzeichnet, dass** die Vakuumquelle (212) Teil eines stationären Abfallsammelsystems (201) ist.

23. System nach einem der Ansprüche 14 bis 22, **gekennzeichnet durch** einen oder mehrere analoge oder digitale Füllstandsensoren (230) im Behälter (102) zum Erfassen von Abfallfüllständen darin.

24. System nach einem der Ansprüche 14 bis 23, **dadurch gekennzeichnet, dass** das Rühr- und Fördermittel (113) ein achsloser Schneckenförderer ist, der von einer Behälterwand (102A) vorsteht.

## Revendications

1. Procédé de fonctionnement d'une cuve de collecte de déchets (102) qui reçoit par intermittence des déchets (W) par au moins une ouverture d'amenée de déchets (105, 105') et duquel des déchets accumulés sont évacués à intervalles, moyennant quoi le processus d'évacuation est commencé en appliquant un vide à la cuve, par une ouverture d'évacuation de cuve (107), et l'évacuation de déchets est réalisée en créant à l'aide du vide appliqué, un flux d'air provenant d'une admission d'air atmosphérique (115) dans la cuve et par l'ouverture d'évacuation et avec l'assistance d'un moyen d'agitation et de transport (113) de type transporteur à vis sans fin qui est supporté à proximité d'une section inférieure (114) de la cuve et qui est tourné par un moteur d'entraînement (116), **caractérisé par** la réalisation des étapes suivantes :
- la détection à un moment prédéterminé (X) après l'ouverture d'une valve d'évacuation (107A) commandant l'ouverture d'évacuation de cuve (107) et après l'application du vide, d'une valeur représentative du flux d'air par la cuve (102) ainsi que d'une valeur représentative du niveau du vide appliqué à la cuve (102) ;
- la comparaison des valeurs détectées représentatives du flux d'air et du niveau de vide respectivement avec des valeurs seuil minimales et maximales sélectionnées ; et
- l'activation du moyen d'agitation et de transport (113) lorsque les valeurs de flux d'air et de niveau de vide détectées se trouvent au-dessus et en dessous des valeurs seuil respectives ;
- pour ainsi évacuer des déchets de la cuve (102) à l'aide du vide appliqué assisté par le moyen d'agitation et de transport (113).

2. Procédé selon la revendication 1, **caractérisé par** la détection d'une pression différentielle entre une pression d'air atmosphérique et une pression dans l'admission d'air comme une valeur représentative du flux d'air passant par la cuve (102).

3. Procédé selon la revendication 1 ou 2, caractérisé pendant le fonctionnement du moyen d'agitation et de transport (113), par la surveillance en continu de la valeur détectée représentative du flux d'air dans l'admission d'air (115) ainsi que de la valeur représentative du niveau de vide dans la cuve (102) et leur comparaison avec desdites valeurs seuil respectives et par la désactivation au moins temporaire du moyen d'agitation et de transport (113) au cas où n'importe laquelle desdites valeurs tombe en dessous et au-dessus respectivement de leurs valeurs seuil minimales et maximales respectivement.

4. Procédé selon la revendication 3, caractérisé pendant le fonctionnement du moyen d'agitation et de transport (113), par la détection en continu aussi d'une valeur représentative de la charge de moteur réelle placée sur le moteur d'entraînement (116) du moyen d'agitation et de transport et sa comparaison avec une valeur seuil maximale sélectionnée et par la désactivation du moyen d'agitation et de transport (113) aussi au cas où ladite valeur représentative de la charge de moteur tombe au-dessus de sa valeur seuil maximale.

5. Procédé selon l'une quelconque des revendications 3 ou 4, **caractérisé par** la détection de la durée de désactivation du moyen d'agitation et de transport (113) en raison d'une telle valeur détectée tombant au-dessus ou en dessous de sa valeur seuil respective et par l'inversion du moteur d'entraînement (116) et ainsi le fonctionnement du moyen d'agitation et de transport pour un temps sélectionné (Z) au cas où la durée d'une telle désactivation du moyen d'agitation et de transport excède un temps sélectionné (Y).

6. Procédé selon la revendication 5, **caractérisé par** la réalisation de l'inversion du moteur d'entraînement (116) et ainsi du fonctionnement du moyen d'agitation et de transport (113) pour un temps sélectionné (Z) d'approximativement 2 à 5 secondes.

7. Procédé selon la revendication 5 ou 6, **caractérisé par** l'inversion du moteur d'entraînement (116) et ainsi du fonctionnement du moyen d'agitation et de transport (113) après une désactivation du moyen d'agitation et de transport excédant un temps sélectionné (Y) d'approximativement 4 à 5 secondes.

8. Procédé selon l'une quelconque des revendications 1 à 7, **caractérisé par** l'activation du moyen d'agitation et de transport (113) pour une période de temps continue maximale (T) d'approximativement 3 minutes.

9. Procédé selon l'une quelconque des revendications 1 à 8, **caractérisé par** la détection continue du flux de matériau de déchets (W) de la cuve (102) et par la désactivation du moyen d'agitation et de transport (113), l'interruption de l'application du vide à la cuve et dans le cas applicable, la fermeture de l'ouverture d'évacuation de cuve (107) lorsqu'un flux de matériau de déchet n'a pas été détecté pour une période de temps prédéfinie (R).

10. Procédé selon l'une quelconque des revendications 1 à 9, **caractérisé par** la commande de la vitesse de rotation du moyen d'agitation et de transport (113) en fonction des valeurs détectées de flux d'air, du niveau de vide et/ou de couple d'entraînement.

11. Procédé selon l'une quelconque des revendications 1 à 10, **caractérisé par** l'application du vide d'une source de vide (112) située dans un camion de collecte mobile (110).

12. Procédé selon l'une quelconque des revendications 1 à 10, **caractérisé par** l'application du vide d'une source de vide (212) d'un système de collecte de déchets stationnaire (201).

13. Procédé selon l'une quelconque des revendications 1 à 12, **caractérisé par** la détection de la valeur de flux d'air ainsi que de la valeur de niveau de vide approximativement 15 secondes après le début du processus d'évacuation.

14. Système de commande du fonctionnement d'une cuve de collecte de déchets (102) présentant au moins une ouverture d'amenée de déchets (105), par laquelle des déchets (W) sont reçus, une ouverture d'évacuation de cuve (107), par laquelle des déchets accumulés sont évacués dans un système de tuyau d'évacuation (108 ; 208), une admission d'air atmosphérique (115) dans la cuve, un moyen d'agitation et de transport (113) qui est tourné par un moteur d'entraînement (116) et qui est supporté à proximité d'une section inférieure (114) de la cuve et une source de vide (112 ; 212) communiquant avec le système de tuyau (108 ; 208) pour l'application du vide à la cuve (102), par ladite ouverture d'évacuation (107), **caractérisé par** :
- un moyen (119) pour la détection d'une valeur représentative du flux d'air passant par la cuve (102) ;
- un moyen (120) pour la détection d'une valeur représentative du niveau de vide dans le système de tuyau (108 ; 208) ; et
- un moyen (130) pour la réception des informations desdits moyens de détection (119, 120) pour la comparaison desdites informations reçues avec des valeurs seuil prédéfinies et pour la commande du fonctionnement du moyen d'agitation et de transport (113) et l'application du vide sur la base de ladite comparaison.

15. Système selon la revendication 14, **caractérisé par** un moyen (118) pour la détection d'une valeur représentative de la charge de moteur placée sur le moteur d'entraînement (116) pendant le fonctionnement du moyen d'agitation et de transport (113).

16. Système selon la revendication 15, **caractérisé en ce que** ledit moyen (118) pour la détection d'une valeur représentative de la charge de moteur placée sur le moteur d'entraînement (116) est un relais de courant commandant le moteur.

17. Système selon la revendication 15, **caractérisé en ce que** ledit moyen (118) pour la détection d'une valeur représentative de la charge de moteur placée sur le moteur d'entraînement (116) est un inverseur de fréquence pour la commande du moteur d'entraînement (116).

18. Système selon l'une quelconque des revendications 14 à 17, **caractérisé en ce que** le moyen (119) pour la détection d'une valeur représentative du flux d'air passant par la cuve (102) est un capteur de pression détectant une pression différentielle entre une pression atmosphérique et une pression d'air dans l'admission d'air (115).

19. Système selon l'une quelconque des revendications 14 à 18, **caractérisé par** un moyen (125) pour la détection du passage de matériau de déchets (W) par le système de tuyau (108, 111).

20. Système selon l'une quelconque des revendications 14 à 19, **caractérisé en ce que** ledit moyen (130) pour la réception des informations desdits moyens de détection et pour la commande du fonctionnement du moyen d'agitation et de transport (113) et l'application du vide comprend un contrôleur de logique programmable (131).

21. Système selon l'une quelconque des revendications 14 à 20, **caractérisé en ce que** la source de vide (112) est intégrée dans un véhicule de collecte mobile (110).

22. Système selon l'une quelconque des revendications 14 à 20, **caractérisé en ce que** la source de vide (212) fait partie d'un système de collecte de déchets stationnaire (201).

23. Système selon l'une quelconque des revendications 14 à 22, **caractérisé par** un ou plusieurs capteurs de niveau de remplissage analogiques ou numériques (230) dans la cuve (102) pour la détection des niveaux de remplissage de déchets à l'intérieur.

24. Système selon l'une quelconque des revendications 14 à 23, **caractérisé en ce que** le moyen d'agitation et de transport (113) est un transporteur à vis sans fin sans arbre qui est en porte-à-faux d'une paroi de cuve (102A).
